# EUROPEAN PATENT APPLICATION

(11) **EP 2 990 546 A2**
(43) Date of publication of application: **02.03.2016**
(21) Application number: 15181987.7
(22) Date of filing: 21.08.2015
(51) Int. Cl.: E03B 7/00, E03B 7/07, F16K 3/02, F16K 3/312, F16L 55/105

(54) **METHOD FOR REPLACING A FLUID CONDUIT, AND CLOSURE COUPLER**

(30) Priority: 29.08.2014 NL 2013388; 01.12.2014 NL 2013900
(71) Applicant: PKZ v.o.f., 4691 RX Tholen (NL)
(72) Inventor: Karsten, Ronald, 8219 AN Lelystad (NL)
(74) Representative: D'Halleweyn, Nele Veerle Trees Gertrudis

(57) **Abstract**

Method for replacing a main conduit for a fluid, such as a water conduit, with a new main conduit, wherein the main conduit is connected to a plurality of house connection conduits which lead to a plurality of end users, which method comprises of: closing the main conduit; placing a first and a second closure coupler at a distance from each other in the main conduit, which first and second closure couplers are each provided with a passage in which a removable barrier plate is arranged; wherein placing of the first and second closure couplers in the main conduit is such that the closure coupler is inserted such that the passage lies in line with the main conduit; removing a conduit portion of the main conduit between the first and the second closure couplers and arranging a new conduit portion between the first and the second closure coupler; removing the barrier plate from the first closure coupler; placing a third closure coupler at a distance from the second closure coupler in the main conduit, which third closure coupler is provided with a passage in which a removable barrier plate is provided; wherein placing of the third closure coupler in the main conduit is such that the third closure coupler is inserted such that the passage lies in line with the main conduit; removing a conduit portion of the main conduit between the second and the third closure coupler and arranging a new conduit portion between the second and the third closure coupler; removing the barrier plate from the second closure coupler.

## Description

The present invention relates to a method for replacing a main conduit for a fluid, such as a water conduit, with a new main conduit, wherein the main conduit is connected to a plurality of house connection conduits which lead to a plurality of end users. In addition, the invention relates to a closure coupler and the use of such a closure coupler in the method.

According to existing methods, the house connection conduits leading to the end users, i.e. the houses, are coupled during renovation work on water conduits to a temporary auxiliary main in order to avoid households being disconnected from the drinking water mains for several days when the existing main conduit is being replaced. Laying the auxiliary main entails additional excavation operations and coupling work for the purpose of connecting and disconnecting the auxiliary main.

The present invention has for its object to provide a method for replacing a main conduit, wherein the period of time for which the end users are inconvenienced is shorter than in the existing method and wherein no additional auxiliary main is necessary.

The method according to the invention is distinguished for this purpose in that it comprises the following steps. In a first step the main conduit is closed, i.e. the fluid feed to at least a portion of the main conduit is disconnected. In a subsequent step a first and a second closure coupler are placed at a distance from each other in the main conduit. The first and second closure couplers are each provided with a passage in which a removable barrier plate is arranged. Placing of the first and second closure coupler in the main conduit is such that each closure coupler is inserted such that the passage lies in line with the main conduit. A conduit portion of the main conduit between the first and the second closure couplers is then removed, and a new conduit portion is laid between the first and the second closure couplers. After the new conduit portion has been placed the barrier plate can be removed from the first closure coupler, although this can for instance also be done at the end of a working day. A start can now be made on a subsequent conduit portion. A third closure coupler is arranged at a distance from the second closure coupler in the main conduit. The third closure coupler is provided with a passage in which a removable barrier plate is arranged. Placing of the third closure coupler in the main conduit is such that the third closure coupler is inserted such that the passage lies in line with the main conduit at a distance from the second closure coupler. A conduit portion of the main conduit between the second and the third closure coupler is then removed and a new conduit portion is arranged between the second and the third closure coupler. The barrier plate can now be removed from the second closure coupler.

Applying such a method makes an auxiliary main unnecessary, and only a number of house connection conduits at a time are temporarily disconnected from the mains while the work is being carried out. The inconvenience to the end user is in this way limited.

Within the context of the present invention the term house connection conduit refers to a branch of the main conduit to the property of the end user, for instance a house. In a preferred embodiment a house connection conduit is a branch from the main conduit by means of a saddle coupling in combination with a service valve to the property of the end user.

According to a possible embodiment which is particularly suitable when the main conduit is a loop conduit, the main conduit is reconnected after placing of the first and second closure couplers and before removal of a conduit portion of the main conduit between the first and the second closure coupler, the main conduit is closed again after removal of the barrier plate from the first closure coupler and before placing of the third closure coupler, and the main conduit is reconnected after placing of the third closure coupler and before removal of the conduit portion of the main conduit between the second and the third closure coupler. For a loop conduit only the house connection conduits between the first and the second closure coupler are in this way not connected during replacement of the conduit portion between the first and the second closure coupler, while the other house connection conduits of the main conduit are reconnected. During replacement of the conduit portion between the first and the second closure coupler only the house connection conduits between the second and the third closure coupler are not connected while the other house connection conduits of the main conduit are reconnected. Applying such a method ensures that only a small number of house connection conduits at a time - in a first step the house connection conduits between the first and the second closure coupler and in a second step the house connection conduits between the second and the third closure coupler - are disconnected from the mains while the work is being carried out.

According to a possible embodiment, after replacement of the conduit portion between the first and the second closure coupler and/or after replacement of the conduit portion between the second and the third closure coupler, all placed barrier plates are removed such that the main conduit can be used normally. This is particularly useful for blind main conduits: it is in this way made possible that the main conduit, also in the case of blind main conduits, can be used normally during the evening and at night following work, while the main conduit has only been partially replaced.

Each closure coupler preferably comprises a first connecting pipe, a second connecting pipe and a removable barrier plate, wherein the first and second connecting pipes form the passage which is closed in each case by a removable barrier plate.

In a preferred embodiment the steps starting from placing of the third closure coupler are repeated for a fourth and subsequent closure coupler until the whole main conduit to be replaced has been replaced.

In a preferred embodiment the distance between the first and the second closure coupler and the distance between the second and the third closure coupler lies between 20 and 100 m, preferably between 25 and 60 m, still more preferably between 30 and 50 m. These distances correspond to a reasonable time, for instance about 1 day, for which several house connection conduits are disconnected from the mains.

According to a possible embodiment, placing of the first, second or third closure coupler is such that the first and second connecting pipes are welded to the main conduit. According to another possible embodiment, placing of the first, second or third closure coupler is such that the first and second connecting pipes are connected by means of a tensively strong sleeve connection to end parts of the main conduit. A possible embodiment of a suitable tensively strong sleeve connection is described in EP 1 028 281 B1, the contents of which are included here by way of reference.

Provided according to another aspect of the invention is a closure coupler. The closure coupler comprises a first connecting pipe, a second connecting pipe and a removable barrier plate. The first connecting pipe is provided at an end with a first collar and the second connecting pipe is provided at an end with a second collar. The removable barrier plate is situated between the first and the second collar in order to form a closure in a passage formed by the first and the second connecting pipe. The first collar and/or the second collar is provided with a recess for the barrier plate. A first sealing means is arranged between a first side of the barrier plate and the first collar, and a second sealing means is arranged between a second side of the barrier plate and the second collar. The first and the second sealing means are further configured to form a seal between the first and the second collar following removal of the barrier plate from the passage.

According to a possible embodiment, the closure coupler comprises connecting means for fixing the first connecting pipe with its first collar against the second collar of the second connecting pipe. It is however also possible to manufacture the first and second connecting pipes integrally, in which case no connecting means are necessary.

According to a preferred embodiment, the first collar is provided with a first circular groove and the first sealing means is an O-ring received in the first circular groove. In similar manner the second collar can be provided with a second circular groove and the second sealing means can be an O-ring received in the second circular groove. The stiffness/elasticity of these O-rings is preferably chosen such that it can on the one hand absorb the pressure in the main conduit and on the other provides a good seal, even after removal of the barrier plate. The first circular groove is preferably arranged in the recess for the barrier plate when the recess is provided in the first connecting pipe.

According to an alternative embodiment, the first and second collars are covered with a rubber coating in order to form the first and second sealing means.

According to a preferred embodiment, the first and the second connecting pipe are manufactured from plastic, for instance from HDPE, glass fibre-reinforced HDPE, or POM. The first and second connecting pipes can in this way be easily connected to plastic conduits.

According to a preferred embodiment, the connecting means comprise a first flange fixed all around the first connecting pipe, a second flange fixed all around the second connecting pipe and a plurality of bolt-nut connections which couple the first flange to the second flange. The first collar can in this way be pressed firmly against the second collar. These first and second flanges can be individual annular elements or can be manufactured integrally with the first and second connecting pipes. The first and second flanges can more particularly be integrated with respectively the first and second collars. In such an embodiment plastic clamps can also be used to connect the first collar to the second collar.

In an advantageous embodiment the first and the second flange are individual elements manufactured from metal. The first flange can be a ring which is pushed over the first connecting pipe and which supports against the first collar, and the second flange can be a ring which is pushed over the second connecting pipe and supports against the second collar.

According to another preferred embodiment, the connecting means comprise a first screw thread arranged all around an end portion of the first connecting pipe; and a nut portion with an internal second screw thread complementary to the first screw thread. The nut portion is provided at an end of the second connecting pipe and can be tightened onto the first end portion for the purpose of connecting the first and the second connecting pipes. The end portion preferably extends around a part of the periphery of the first connecting pipe and is interrupted so as to form an opening for insertion of the barrier plate.

According to a possible embodiment, the connecting means further comprise a sleeve configured to extend all around the first and the second connecting pipe. The sleeve is preferably provided with an internal screw thread and the first and/or the second connecting pipe is preferably provided with a complementary screw thread. The sleeve can further be provided with a stop which co-acts with a complementary stop on the first or second connecting pipe.

According to a possible embodiment, a first seal is provided between the sleeve and the first connecting pipe and a second seal is provided between the sleeve and the second connecting pipe. Dirt can in this way be prevented from entering the chamber of the barrier plate.

According to an advantageous embodiment, the recess for the barrier plate is arranged in the first collar and the second collar is provided with a chamber which is adjacent to the recess and has peripheral dimensions corresponding to peripheral dimensions of the recess. The barrier plate can in this way be easily inserted and removed even in the case of small tolerances in the dimensions and/or deformations of the first and second connecting pipes. In an embodiment with O-rings the second circular groove is preferably arranged in the chamber in the second collar.

According to a possible embodiment, the first and second connecting pipes are provided with a tensively strong sleeve connection, preferably as described in EP 1 028 281 B1, the contents of which are included here by way of reference.

According to a possible embodiment, the barrier plate is provided with a coupling means for coupling the barrier plate to the first and/or second flange. According to an exemplary embodiment hereof, the barrier plate is provided with an opening and a bolt protrudes through the opening, which bolt is coupled to the first and/or to the second flange. Accidental removal of the barrier plate can in this way be avoided.

According to another possible embodiment, the barrier plate is provided with a coupling means for coupling the barrier plate to the first and/or second collar.

According to a possible embodiment, a cover is provided for sealing the recess following removal of the barrier plate in order to avoid dirt entering the recess. This cover can be provided on its side facing toward the recess with a sealing layer.

According to yet another aspect of the invention, a method is provided according to any of the above described embodiments, wherein the first, second and third closure couplers are embodied according to any of the above described embodiments.

The invention will be further elucidated on the basis of a number of in no way limitative exemplary embodiments of the method and closure coupler according to the invention, with reference to the accompanying drawings, in which:
Figures 1A-C illustrate a first embodiment of the method according to the invention;
Figure 2 illustrates a second embodiment of the method according to the invention;
Figure 3 illustrates a third embodiment of the method according to the invention;
Figure 4A illustrates a schematic perspective view of a first embodiment of a closure coupler of the invention;
Figure 4B illustrates a cross-sectional perspective view of the first embodiment with barrier plate;
Figure 4C illustrates a cross-section of the first embodiment;
Figure 4D illustrates a perspective view of the first embodiment in which the barrier plate has been removed;
Figure 4E illustrates a perspective view of the first embodiment in which the barrier plate has been removed and a cover element has been arranged over the recess for the barrier plate;
Figure 4F illustrates a cross-sectional perspective view of the first embodiment with cover;
Figure 5A illustrates a schematic perspective view of a second embodiment of a closure coupler of the invention;
Figure 5B illustrates a cross-sectional perspective view of the second embodiment;
Figure 6A illustrates a schematic perspective view of a third embodiment of a closure coupler of the invention;
Figure 6B illustrates a cross-sectional perspective view of the third embodiment;
Figures 7A-7C illustrate cut-away schematic perspective views of a fourth embodiment of a closure coupler of the invention in a situation with barrier plate (figure 7A), during removal of the barrier plate (figure 7B), and with barrier plate removed (figure 7C).

The same reference numerals are used in the figures for the same components.

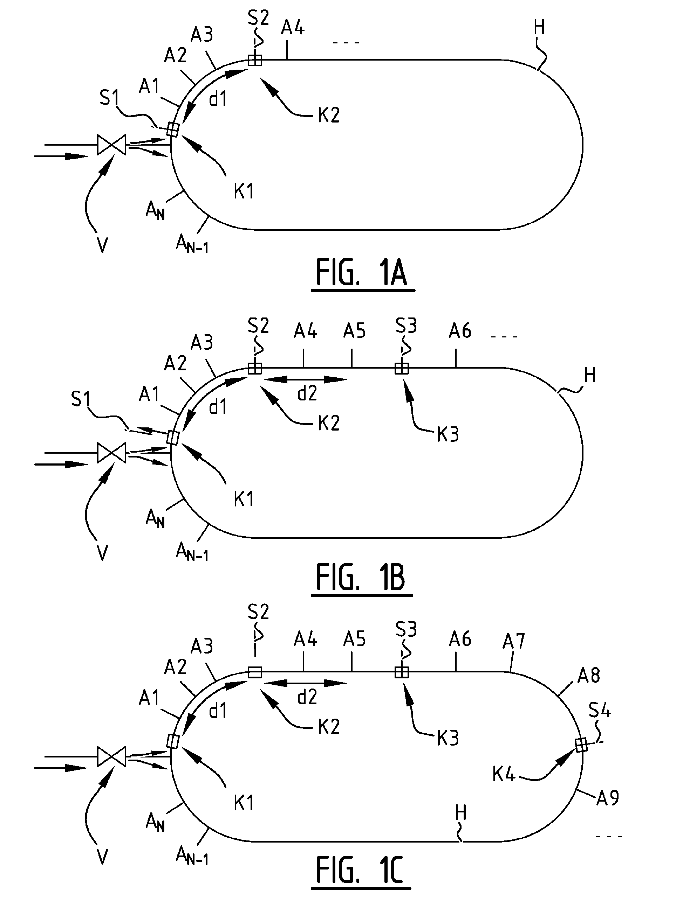

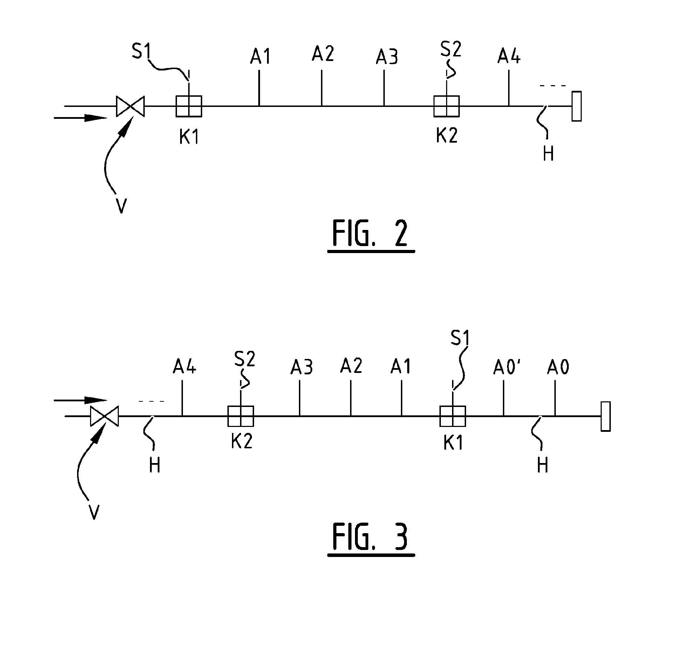

Figures 1A-C illustrate a first embodiment of the method according to the invention. The method comprises the following steps. In a first step the main conduit H, to which a number of house connection conduits A1, ..., AN are connected, is closed. In the illustrated embodiment it is assumed that the main conduit is a water supply conduit which is closed by closing a slide valve V, and that the house connection conduits A1, ..., AN lead to houses. It is further assumed that the main conduit is a loop conduit. The invention can however also be applied for a main conduit which is not a loop conduit but a straight blind string, see also figures 2 and 3 discussed hereinbelow. The skilled person will further appreciate that the fluid can also be a liquid other than water, and can also be gas. In a subsequent step a first closure coupler K1 and a second closure coupler K2 are placed at a distance d1 from each other in main conduit H. First and second closure couplers K1, K2 are each provided with a passage in which a removable barrier plate S1, S2 is arranged. Placing of first and second closure couplers K1, K2 in main conduit H entails each closure coupler being inserted such that the passage lies in line with main conduit H. Main conduit H can then be reconnected, i.e. tap V is reopened, such that only the house connection conduits A1, A2, A3 between first closure coupler K1 and second closure coupler K2 are not connected but the other house connection conduits A4,...,A_{N-1}, AN of main conduit H have been reconnected. This is illustrated in figure 1A.

A conduit portion with a length d1 is then removed between the first and the second closure coupler K1, K2, and a new conduit portion is laid between the first and the second closure coupler K1, K2. After the new conduit portion has been placed, barrier plate S1 is removed from the first closure coupler so that the part of main conduit H between the first and the second closure coupler is reconnected, see figure 1B. It is now possible to start on a subsequent conduit portion with a distance d2. Main conduit H is closed again and a third closure coupler K3 is arranged at a distance d2 from second closure coupler K2 in main conduit H. Main conduit H can then be reconnected, i.e. the fluid supply to main conduit H is reconnected such that only the house connection conduits A4, A5 between second closure coupler K2 and third closure coupler K3 are unconnected but the other house connection conduits A1, A2, A3, A6, ..., AN of main conduit H have been reconnected. A conduit portion with a distance d2 is then removed between the second and the third closure coupler K2, K3 and a new conduit portion is arranged between the second and the third closure coupler K2, K3. Barrier plate S2 can now be removed from second closure coupler K2 so that the whole main conduit H is reconnected, see figure 1C. These steps are repeated for a fourth closure coupler K4, and so on, until the whole main conduit H to be replaced has been replaced.

The distance d1 between first and the second closure couplers K1, K2 and the distance d2 between the second and the third closure coupler K2, K3 preferably lies between 20 and 100 m, more preferably between 25 and 60 m, and still more preferably between 30 and 50 m. These distances correspond to a reasonable period of time, for instance about 1 day, in which only a few house connection conduits at a time are disconnected from the mains, for instance A1, A2, A3 on the first day and A4, A5 on the second day.

According to a possible embodiment, placing of the first, second or third closure coupler entails a first and second connecting pipe end of the closure coupler being welded to main conduit H. According to another possible embodiment, placing of the first, second or third closure coupler K1, K2, K3 entails a first and second connecting pipe end of the closure coupler being connected by means of a tensively strong sleeve connection to end parts of main conduit H. A possible embodiment of a suitable tensively strong sleeve joint is described in EP 1 028 281 B1, the contents of which are included here by way of reference.

Figure 2 illustrates a second embodiment of the method according to the invention. In the second embodiment it is assumed that the main conduit is a straight, blind water supply conduit which is closable by a slide valve V and that the house connection conduits A1, A2, ..., AN lead to houses. In a first step main conduit H, to which a number of house connection conduits A1, ..., AN are connected, is closed. In a subsequent step a first closure coupler K1 and a second closure coupler K2 are placed at a distance d1 from each other in main conduit H. First and second closure couplers K1, K2 are each provided with a passage in which a removable barrier plate S1, S2 is arranged. A conduit portion with a length d1 is then removed between the first and the second closure coupler K1, K2 and a new conduit portion is laid between the first and the second closure coupler K1, K2. After the new conduit portion has been placed, barrier plate S1 is removed from the first closure coupler. Main conduit H can then be reconnected so that the part of main conduit H between the first and the second closure coupler is reconnected. It is now possible to start on a subsequent conduit portion. This can be done in the same way as in the first embodiment, making use of a third closure coupler. Barrier plate S2 can then be removed from second closure coupler K2. These steps are repeated for a fourth closure coupler, and so on, until the whole main conduit H to be replaced has been replaced. In the case of a blind conduit it will typically be ensured at the end of a working day that the conduit portion which is being worked on at that moment is completely finished and the barrier plates are removed from all already placed closure couplers such that all houses connected to the main conduit are still provided with water during the evening and at night.

Figure 3 illustrates a third embodiment of the method according to the invention. It is assumed in the third embodiment that the main conduit is a straight, blind water supply conduit which is closable by a slide valve V, and that the house connection conduits A0, A0', A1, A2, ..., AN lead to houses. In a first step main conduit H, to which a number of house connection conduits A0, A0', ..., AN is connected, is closed. In the third embodiment the work is started at the end of the blind conduit instead of at the beginning (second embodiment of figure 2). Only first closure coupler K1 will in the first instance have to be placed here, after which the conduit portion between the first closure coupler and the end of the main conduit can be replaced. In a subsequent step a second closure coupler K2 is placed in main conduit H at a distance d1 from first closure coupler K1. A conduit portion with a length d1 is then removed between the first and the second closure coupler K1, K2, and a new conduit portion is laid between the first and the second closure coupler K1, K2. After the new conduit portion has been placed, barrier plate S1 can be removed from the first closure coupler (although this can also take place later). It is now possible to start on a subsequent conduit portion. This can take place in the same way as in the first embodiment, making use of a third closure coupler. Then (or at the end of a working day) barrier plate S2 can be removed from second closure coupler K2. These steps are repeated for a fourth closure coupler, and so on, until the whole main conduit H to be replaced has been replaced. Also in the case of the blind conduit of figure 3 it will typically be ensured at the end of a working day that the conduit portion which is being worked on at that moment is completely finished and that the barrier plates have been removed from all already placed closure couplers such that all houses connected to the main conduit are still provided with water during the evening and at night.

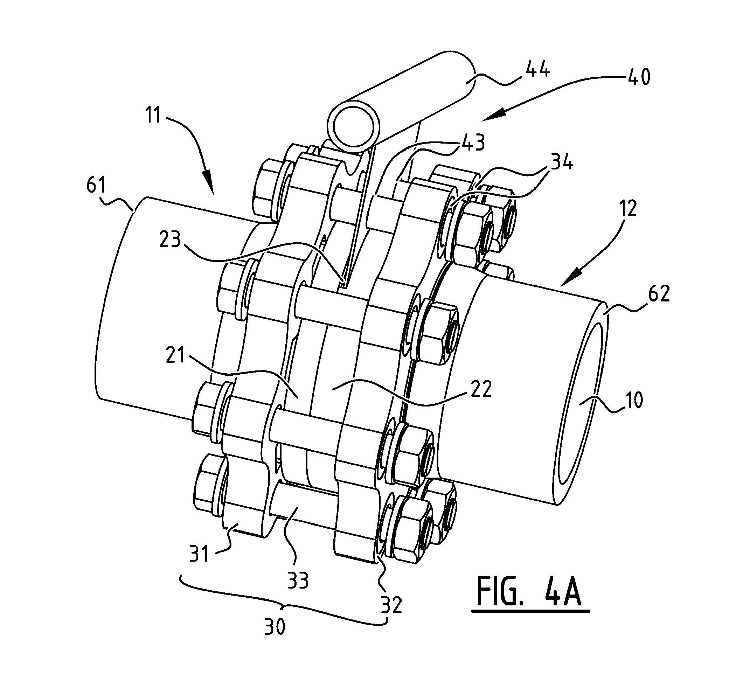

Several embodiments of suitable closure couplers will now be described with reference to figures 4A-4E, 5A-5B and 6A-6B.

Figures 4A-4F illustrate a first embodiment of a closure coupler. The closure coupler comprises a first connecting pipe 11, a second connecting pipe 12, connecting means 30 for connecting the first and second connecting pipes 11, 12 and a removable barrier plate 40. First connecting pipe 11 is provided at an end with a first collar 21 and second connecting pipe 12 is provided at an end with a second collar 22. Connecting means 30 fix first connecting pipe 11 with its first collar 21 against second collar 22 of second connecting pipe 12. The removable barrier plate 40 is situated between first collar 21 and second collar 22 so as to form a closure in a passage 10 formed by first connecting pipe 11 and second connecting pipe 12. Second collar 22 is provided with a recess 23 for barrier plate 40. A first sealing means (not drawn) is arranged between a first side 41 of barrier plate 40 and first collar 21 in a first circular groove 51 provided in first collar 21. A second sealing means (not drawn) is arranged between a second side 42 of barrier plate 40 and second collar 22 in a second circular groove 52 provided in second collar 22. The first and the second sealing means are further configured to form a seal between first and second collars 21, 22 after removal of barrier plate 40 from the passage, and can for instance be O-rings.

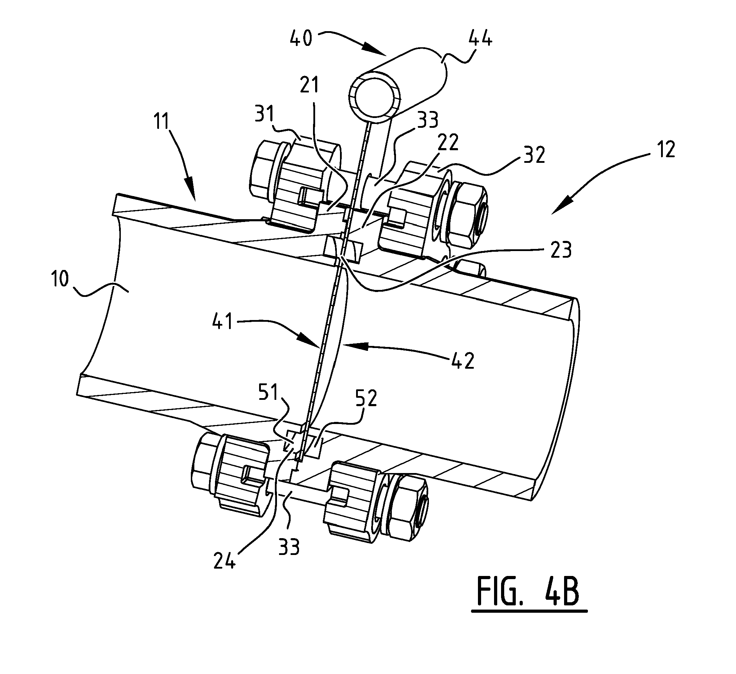

Connecting means 30 comprise a first annular flange 31 which is fixed all around first connecting pipe 11, a second annular flange 32 fixed all around second connecting pipe 12 and a plurality of bolt-nut connections 33 which couple first flange 31 to second flange 32. First flange 31 is pushed over first connecting pipe 11 and supports against first collar 21, and second flange 32 is pushed over second connecting pipe 12 and supports against second collar 22. The inner diameter of the first and second flanges 31, 32 preferably corresponds substantially to the outer diameter of the first and second connecting pipes just in front of the stop formed by first and second collars 21, 22. In a possible embodiment the thickness of first and second connecting pipes 11, 12 increases gradually in the direction of first and second collars 21, 22, as can be clearly seen in figure 4B.

The first and the second connecting pipe 11, 12 are preferably manufactured from plastic, for instance HDPE. The first and the second flange 31, 32 are preferably manufactured from metal. According to a variant, the first and second flanges can be embodied integrally with the first and second connecting pipes, preferably in plastic.

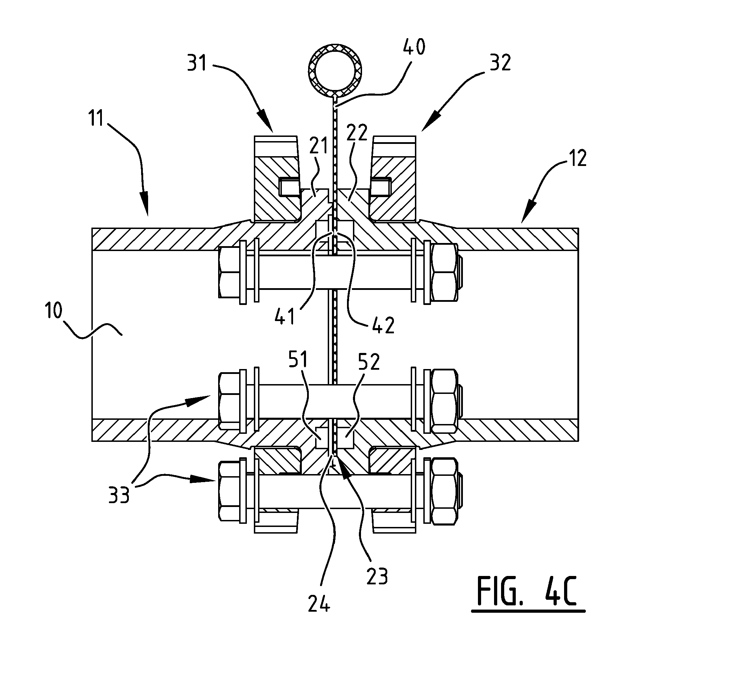

First collar 21 is provided with a chamber 24 which is adjacent to recess 23 and has peripheral dimensions corresponding to peripheral dimensions of recess 23, as can be seen most clearly in figures 4B and 4C. Note that it is also possible to dispense with chamber 24 and/or to embody recess 23 with larger dimensions as seen in the longitudinal direction of passage 10.

Barrier plate 40 can be provided with openings 43 through which bolts 33 can be inserted for the purpose of locking barrier plate 40. These bolts 33 can then likewise be inserted through openings 34 in flanges 31, 32. It is in this way possible to prevent vandals being able to easily remove barrier plates 40 or barrier plates 40 being accidentally removed. Barrier plate 40 can further be provided with a handle 44 to facilitate pulling of barrier plate 40 out of the passage.

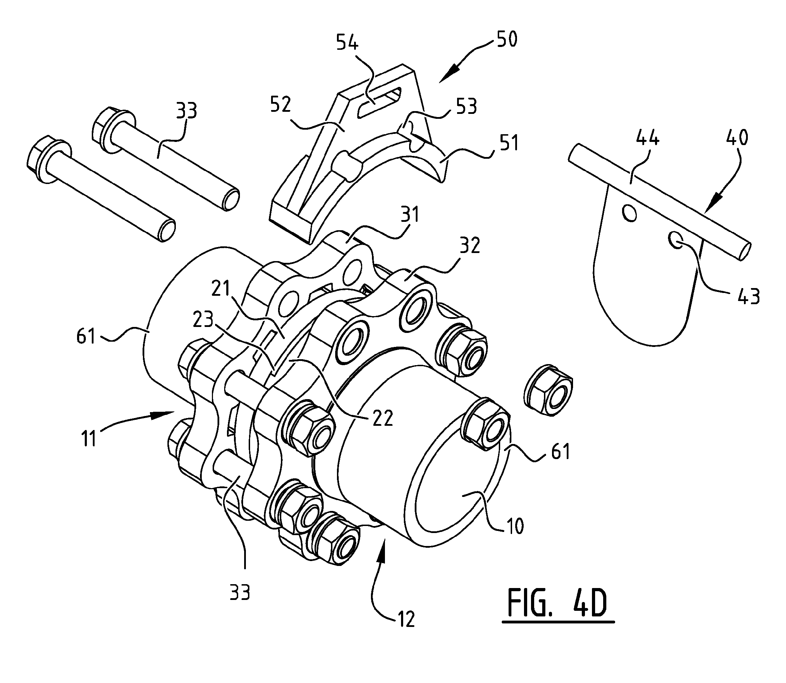

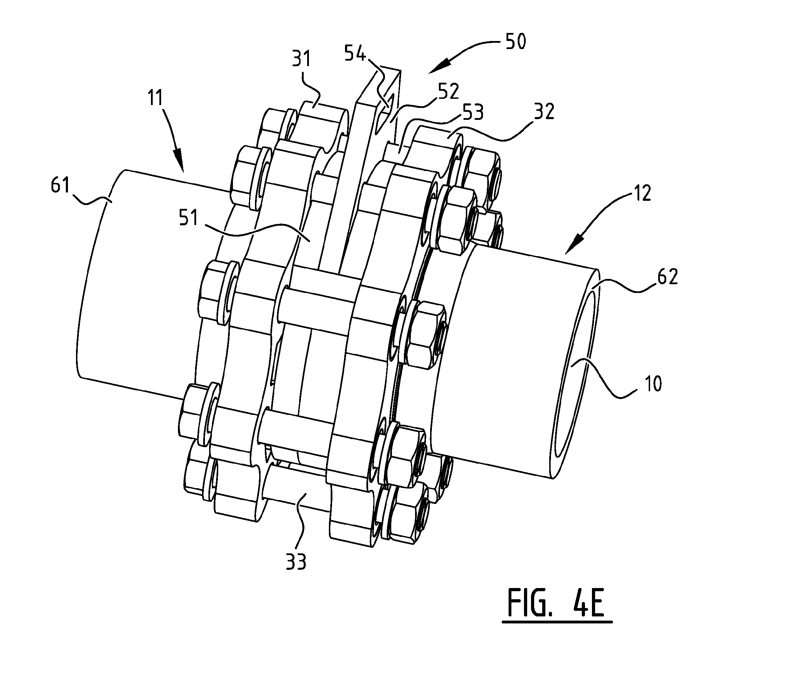

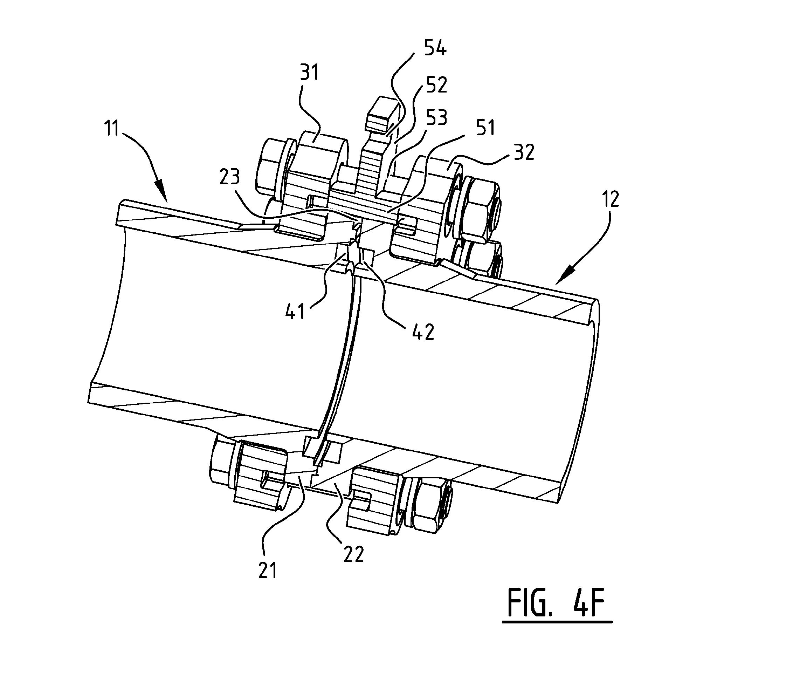

After removal of barrier plate 40 a cover 50 can optionally be provided to seal recess 23 such that no dirt can penetrate into recess 23, see figures 4D, 4E and 4F. It is noted that the first and second sealing means form a seal between first and second collars 21, 22 but that the space in the recess 23 lying all around the sealing means is not sealed off. Cover 50 can prevent dirt collecting in this space. Cover 50 comprises a closing part 51 having a shape which matches the shape of first and second collars 21, 22, and a fixing part 52 in which are arranged openings 53 which allow the cover to be locked using bolts 33 which are inserted through openings 34 in first and second flanges 31, 32 and through openings 53 in cover 50. A recess 54 forming a handle can further be arranged in order to facilitate manipulation of cover 50. The lower surface of closing part 51 is preferably provided with a rubber insert for sealing recess 23.

The closure coupler has a first and second connecting pipe end 61, 62 in the form of a tapering end which can be welded to a main conduit H. In the illustrated embodiment first and second connecting pipes 11, 12 are straight and lie mutually in line. It is however also possible for these connecting pipes 11, 12 to form an angle relative to each other and/or to take a curved form. It is further possible to provide T-closure couplers with two, three or more barrier plates in which three, four or more connecting pipes are mutually connected with interposing of a barrier plate.

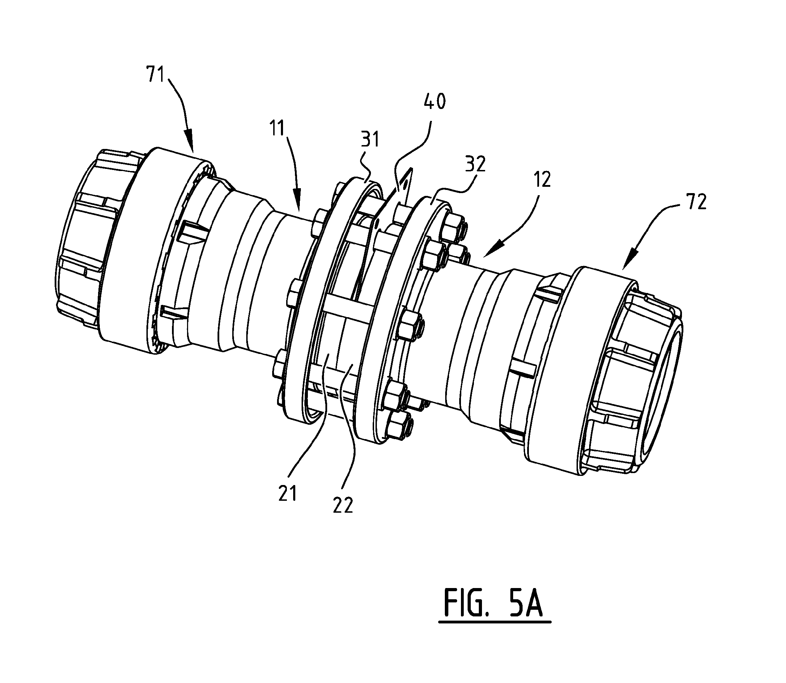

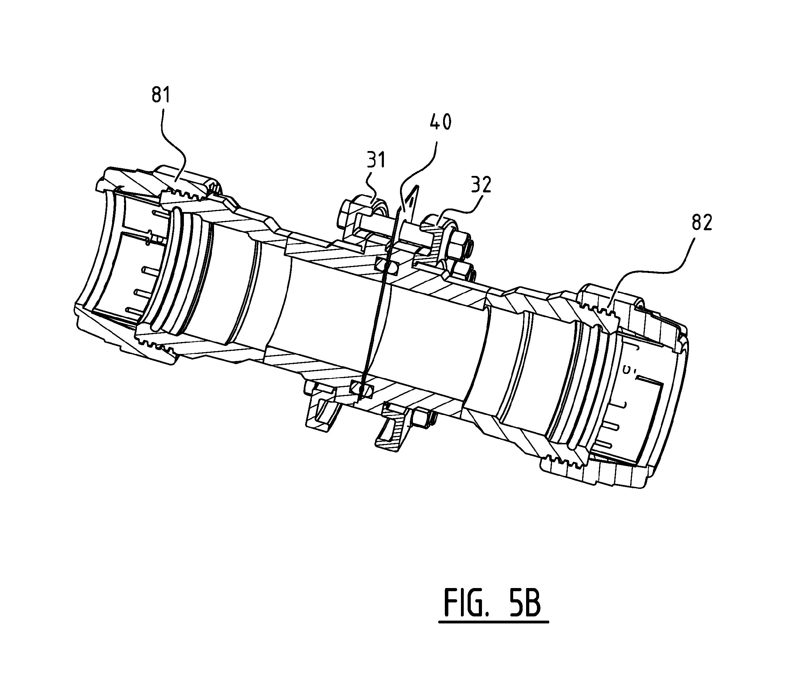

Figures 5A-5B illustrate a second embodiment of a closure coupler. This is similar to the first embodiment, with the difference that flanges 31, 32 have a U-shaped cross-section and that the first and second connecting pipe ends of the closure coupler are connected to end parts of main conduit H by means of a first and second tensively strong sleeve connection 71, 72 with rings 81, 82. A possible embodiment of a suitable tensively strong sleeve connection 71, 72 is described in EP 1 028 281 B1, the contents of which are included here by way of reference.

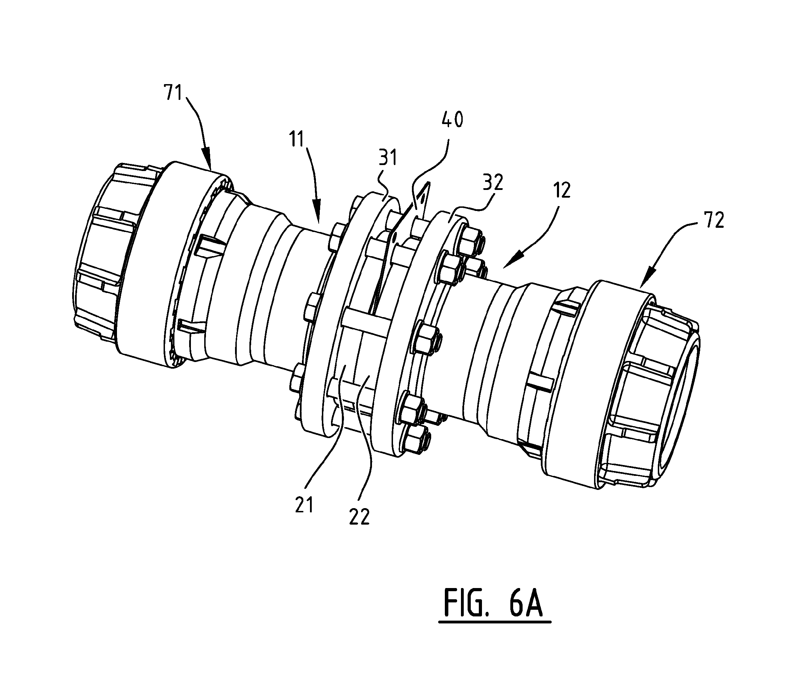

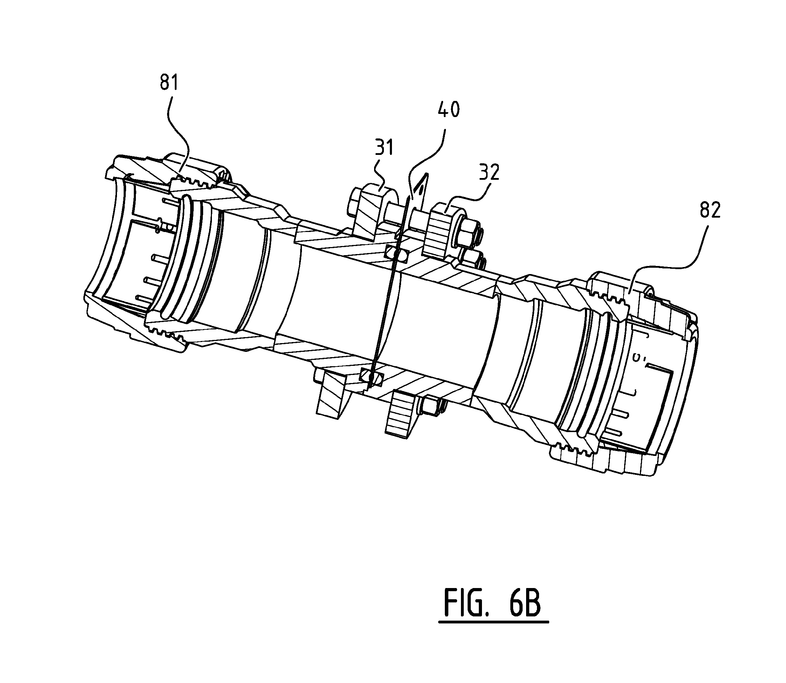

Figures 6A-6B illustrate a third embodiment of a closure coupler. This is similar to the second embodiment, with the difference that flanges 31, 32 are embodied as in the first embodiment.

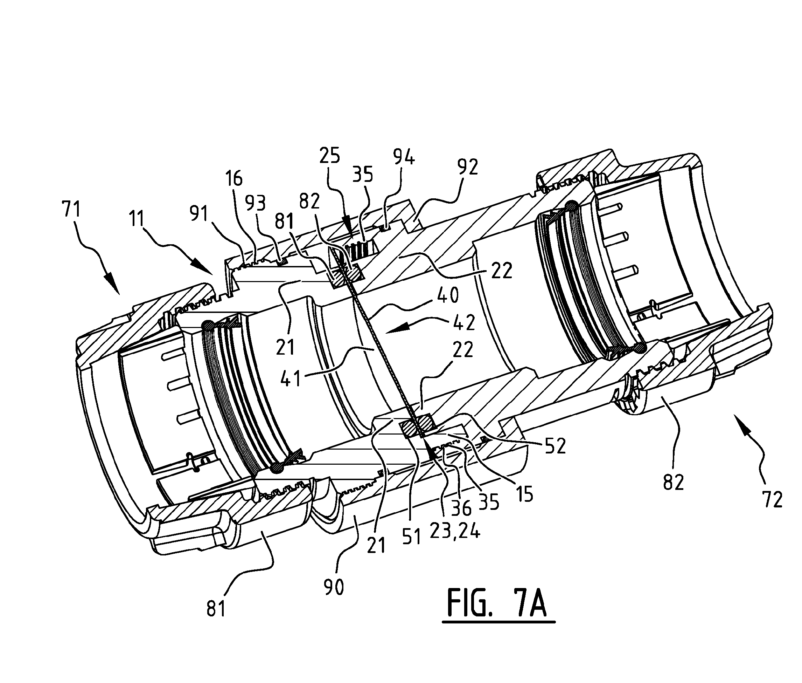

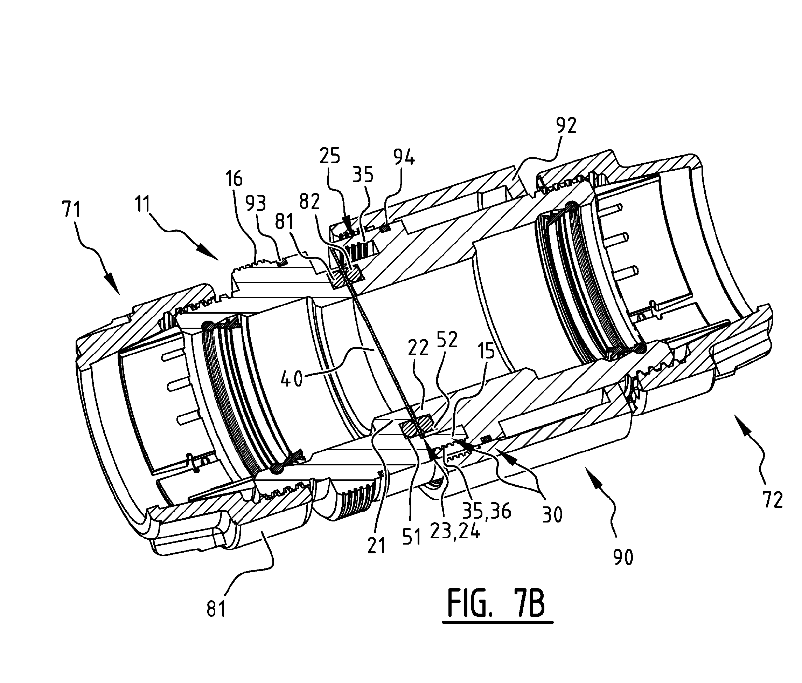

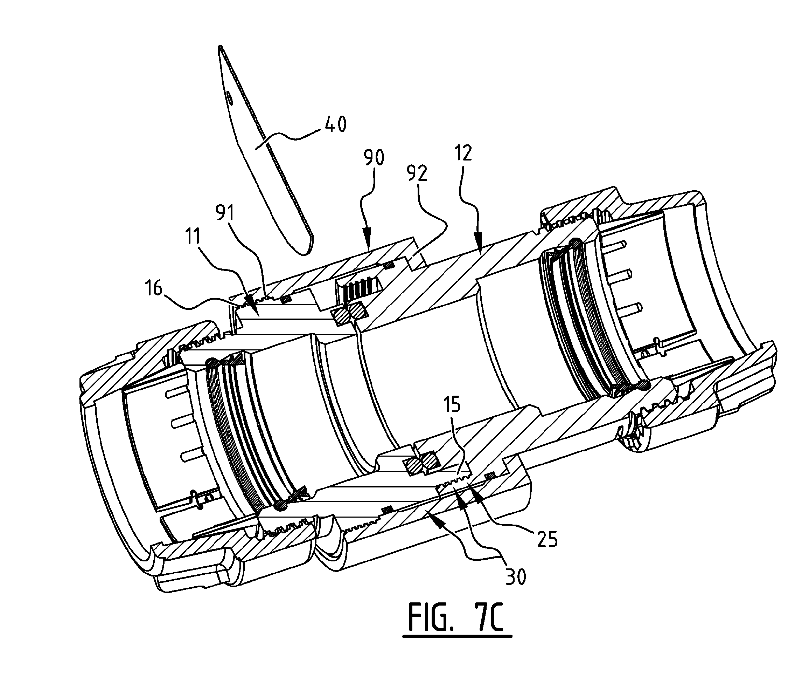

Figures 7A-7C illustrate a fourth embodiment of a closure coupler. The closure coupler comprises a first connecting pipe 11, a second connecting pipe 12, connecting means 30 for connecting first and second connecting pipes 11, 12, and a removable barrier plate 40. First connecting pipe 11 is provided at an end with a first collar 21 and second connecting pipe 12 is provided at an end with a second collar 22. Connecting means 30 fix first connecting pipe 11 with its first collar 21 against second collar 22 of second connecting pipe 12. The removable barrier plate 40 is situated between first collar 21 and second collar 22 so as to form a closure in a passage formed by first connecting pipe 11 and second connecting pipe 12. A first sealing means in the form of an O-ring 81 is arranged between a first side 41 of barrier plate 40 and first collar 21 in a first circular groove 51 provided in first collar 21. A second sealing means in the form of an O-ring 82 is arranged between a second side 42 of barrier plate 40 and second collar 22 in a second circular groove 52 provided in second collar 22. The first and the second sealing means 81, 82 are further configured to form a seal between the first and the second collar 21, 22 after removal of barrier plate 40 from the passage.

Second collar 22 is provided with a recess 23 and first collar 21 is provided with a chamber 24 which is adjacent to recess 23 and has peripheral dimensions which correspond to peripheral dimensions of recess 23, this such that barrier plate 40 can be inserted.

Connecting means 30 comprise a first screw thread 35 which is arranged all around first connecting pipe 11, and more specifically around an end portion 15 of first connecting pipe 11; and a nut portion 25 with a second screw thread 36 which is complementary to first screw thread 35, this nut portion 25 being provided at an end of second connecting pipe 12. End portion 15 extends around a part of the periphery of first connecting pipe 11 and is interrupted so as to form an opening for insertion of barrier plate 40. Second connecting pipe 12 can be fixed against first connecting pipe 11 by tightening nut part 25 onto end portion 15. Connecting means 30 further comprise an optional sleeve 90 with a stop 92 and an internal screw thread 91 which is complementary to a screw thread 16 on first connecting pipe 11. This sleeve 90 imparts additional strength to the coupling of first connecting pipe 11 against second connecting pipe 12 and can further prevent dirt entering chamber 23. Additional seals 93, 94 can be provided for this purpose between sleeve 90 and respectively the first connecting pipe 11 and second connecting pipe 12. Sleeve 90 will further ensure that vandals will not be able to easily remove barrier plates 40 or that barrier plates 40 cannot be accidentally removed.

The first and the second connecting pipe 11, 12 are preferably manufactured from plastic, for instance HDPE. Sleeve 90 is preferably manufactured from metal.

The ends of the first and second connecting pipes are configured to be connected to end parts of main conduit H by means of a first and second tensively strong sleeve connection 71, 72 with rings 81, 82. A possible embodiment of a suitable tensively strong sleeve connection 71, 72 is described in EP 1 028 281 B1, the contents of which are included here by way of reference.

In the discussed exemplary embodiments the fluid has been water, although the skilled person will appreciate that the invention can also be applied for another fluid, such as gas.

The skilled person will appreciate that many variants and modifications can be envisaged within the scope of the invention, which is defined solely by the following claims.

## Claims

1. Method for replacing a main conduit for a fluid, such as a water conduit, with a new main conduit, wherein the main conduit is connected to a plurality of house connection conduits which lead to a plurality of end users, which method comprises of:
closing the main conduit;
placing a first and a second closure coupler at a distance from each other in the main conduit, which first and second closure couplers are each provided with a passage in which a removable barrier plate is provided; wherein placing of the first and second closure coupler in the main conduit is such that the closure coupler is inserted such that the passage lies in line with the main conduit;
removing a conduit portion of the main conduit between the first and the second closure coupler and arranging a new conduit portion between the first and the second closure coupler;
removing the barrier plate from the first closure coupler;
placing a third closure coupler at a distance from the second closure coupler in the main conduit, which third closure coupler is provided with a passage in which a removable barrier plate is provided; wherein placing of the third closure coupler in the main conduit is such that the third closure coupler is inserted such that the passage lies in line with the main conduit;
removing a conduit portion of the main conduit between the second and the third closure coupler and arranging a new conduit portion between the second and the third closure coupler;
removing the barrier plate from the second closure coupler.

2. Method as claimed in claim 1, **characterized in that** the main conduit is reconnected after placing of the first and second closure couplers and before removal of a conduit portion of the main conduit between the first and the second closure coupler, that the main conduit is closed again after removal of the barrier plate from the first closure coupler and before placing of the third closure coupler, and that the main conduit is reconnected after placing of the third closure coupler and before removal of the conduit portion of the main conduit between the second and the third closure coupler.

3. Method as claimed in claim 1 or 2, **characterized in that** after replacement of the conduit portion between the first and the second closure coupler and/or after replacement of the conduit portion between the second and the third closure coupler, all placed barrier plates are removed such that the main conduit can be used normally.

4. Method as claimed in any of the foregoing claims, **characterized in that** the steps starting from placing of the third closure coupler are repeated for a fourth and subsequent closure coupler until the whole main conduit to be replaced has been replaced.

5. Method as claimed in any of the foregoing claims, **characterized in that** the distance between the first and the second closure coupler and the distance between the second and the third closure coupler lies between 20 and 100 m, preferably between 25 and 60 m, still more preferably between 30 and 50 m.

6. Method as claimed in any of the foregoing claims, **characterized in that** placing of the first, second or third closure coupler is such that a first and second connecting pipe end of the closure coupler are welded to the main conduit.

7. Method as claimed in any of the claims 1-5, **characterized in that** placing of the first, second or third closure coupler is such that a first and second connecting pipe end of the closure coupler are connected by means of a tensively strong sleeve connection to end parts of the main conduit.

8. Method as claimed in any of the foregoing claims, **characterized in that** the main conduit is a loop conduit.

9. Method as claimed in any of the foregoing claims, **characterized in that** the main conduit is a blind string and that, after replacement of the conduit portions between the first and third closure couplers, the third barrier plate is also removed when no work is being carried out.

10. Closure coupler, comprising:
- a first connecting pipe provided at an end with a first collar;
- a second connecting pipe provided at an end with a second collar;
- a removable barrier plate between the first and the second collar in order to form a closure in a passage formed by the first and the second connecting pipe;
wherein the first collar and/or the second collar is provided with a recess for the barrier plate; wherein a first sealing means is arranged between a first side of the barrier plate and the first collar, and a second sealing means is arranged between a second side of the barrier plate and the second collar;
wherein the first and the second sealing means are configured to form a seal between the first and the second collar following removal of the barrier plate from the passage;
wherein the closure coupler further comprises connecting means for fixing the first connecting pipe with its first collar against the second collar of the second connecting pipe.

11. Closure coupler as claimed in claim 10, **characterized in that** the connecting means comprise a first screw thread arranged all around an end portion of the first connecting pipe; and a nut portion with an internal second screw thread complementary to the first screw thread, which nut portion is provided at an end of the second connecting pipe.

12. Closure coupler as claimed in claim 11, **characterized in that** the end portion extends around a part of the periphery of the first connecting pipe and is interrupted so as to form an opening for insertion of the barrier plate.

13. Closure coupler as claimed in claim 10, 11 or 12, **characterized in that** the connecting means comprise a sleeve, which sleeve is configured to extend all around the first and the second connecting pipe.

14. Closure coupler as claimed in claim 13, **characterized in that** the sleeve is provided with an internal screw thread and that the first and/or the second connecting pipe is provided with a complementary screw thread.

15. Method as claimed in any of the claims 1-9, wherein the first, second and third closure couplers are embodied according to any of the claims 10-14.
